Europäisches Patentamt

European Patent Office

Office européen des brevets

(11) Publication number: **0 323 741 B1**

# EUROPEAN PATENT SPECIFICATION

(45) Date of publication of patent specification: 25.08.93    (51) Int. Cl.⁵: **C08L 23/10**, C08L 53/02

(21) Application number: **88312227.7**

(22) Date of filing: **22.12.88**

The file contains technical information submitted after the application was filed and not included in this specification

(54) **Thermoplastic elastomer composition and process for producing the same.**

(30) Priority: **24.12.87 JP 328855/87**

(43) Date of publication of application:
**12.07.89 Bulletin 89/28**

(45) Publication of the grant of the patent:
**25.08.93 Bulletin 93/34**

(84) Designated Contracting States:
**DE FR GB IT**

(56) References cited:
**EP-A- 0 168 203**
**EP-A- 0 227 139**
**US-A- 4 006 116**

(73) Proprietor: **SUMITOMO CHEMICAL COMPANY, LIMITED**
**Kitahama 4-chome 5-33**
**Chuo-ku Osaka 541(JP)**

(72) Inventor: **Mitsuno, Tatsuyuki**
**1-9, Yushudainishi**
**Ichihara-shi Chiba 299-01(JP)**
Inventor: **Shinonaga, Hideo**
**285-172, Higashiterayamacho**
**Chiba-shi Chiba 260(JP)**
Inventor: **Yamamoto, Masashi**
**1-9, Yushudainishi**
**Ichihara-shi Chiba 299-01(JP)**

(74) Representative: **Cresswell, Thomas Anthony et al**
**J.A. Kemp & Co. 14 South Square Gray's Inn**
**London WC1R 5EU (GB)**

**Description**

This invention relates to a thermoplastic elastomer composition having excellent appearance and a process for producing it.

Recently, thermoplastic elastomers have steadily expanded their applications including parts of automobiles and household appliances because of their low-hardness and flexibility as well as their moldability by conventional methods such as extrusion molding, injection molding, etc.

Especially, for the application to large functional parts of automobiles, e.g., automobile exterior trim parts such as bumpers, injection moldability, appearance of molded products, heat resistance, mechanical properties such as low-temperature impact resistance and paintability are required at a high level.

This invention relates to a thermoplastic elastomer composition which is excellent in injection moldability and capable of providing large molded products excellent in appearance, low in directional dependence of mechanical properties, especially tensile property, with keeping low-temperature impact resistance. It also relates to a process for producing the composition. This composition is especially intended to be used as automobile parts mentioned above.

Hitherto, a thermoplastic elastomer is known, which is mainly composed of polypropylene and a selectively hydrogenated block copolymer (referred to hereinafter as "block copolymer (A)") having at least two mono-alkenyl or mono-alkenylidene aromatic hydrocarbon polymer block A and at least one partially or completely hydrogenated aliphatic conjugated diene hydrocarbon polymer block B. This elastomer has been used for automobile parts, household appliances, wire coating and medical parts because of its excellent appearance, flexibility, rubber elasticity and moldability. When this is made into a large molded product such as a bumper, it exhibits a good appearance or gloss, however, it still suffers from inferior releasability from the mold after injection and from thickness dependence and anisotropy of mechanical properties, especially, tensile property which seem to be caused by orientation of block copolymer (A). The term "anisotropy" herein means a difference in properties depending upon a flow direction at molding (MD) or a direction (TD) transverse to the MD and can be expressed as a ratio MD/TD.

In order to solve the thickness dependence and anisotropy of mechanical properties, especially tensile property in large molded products of the thermoplastic elastomer mainly composed of block copolymer (A) and polypropylene, it can be considered to use block copolymer (A) of high molecular weight. However, such block copolymer (A) causes appearance of injection molded products to degrade, occurring flow mark or uneven gloss on their surface.

EP-A-0 168 203 describes moulded exterior parts for automobiles formed of a composition comprising a block copolymer with mono-vinyl-substituted aromatic hydrocarbon blocks and elastomeric polymer blocks, a block copolymer of propylene and an

- olefin and optionally a rubber softening agent and an ethylene
- olefin copolymer rubber.

An object of this invention is to provide molded products of large size such as bumper parts for automobiles which have little thickness dependence and anisotropy in mechanical properties, especially tensile strength, and are good in moldability and superior in appearance with retaining low-temperature impact resistance.

Another object of this invention is to provide materials small in linear expansion coefficient with retaining the above mentioned characteristics for exterior trim parts of automobiles such as side protectors which require small dimensional changes in summer and winter.

As a result of the inventors' intensive study in an attempt to attain the above objects, this invention has been accomplished.

In accordance with the present invention, it has been found that a thermoplastic elastomer composition which is good in moldability, excellent in appearance and little in thickness dependence and anisotropy of mechanical properties, especially tensile strength, and retains low-temperature impact strength, can be obtained by (1) a process which comprises previously melt-kneading a specific block copolymer (A) together with an extender oil and a polypropylene, and then again melt-kneading them with addition of a specific polypropylene or (2) a process which comprises previously preparing a specific block copolymer (A) extended previously with an extender oil by melt-kneading, and then melt-kneading it with a specific polypropylene.

It has also been found that by further addition of a filler, a thermoplastic elastomer having the above properties and a small linear expansion coefficient can be obtained.

That is, this invention relates to a thermoplastic elastomer composition which comprises a previously melt-kneaded intermediate composition as defined in claim 1 and a process for producing a thermoplastic elastomer composition, as defined in claim 8.

This invention further relates to the above mentioned thermoplastic elastomer composition which additionally contains (e) 50 - 150 parts by weight of a filler per 100 parts by weight of (a) block copolymer (A).

Furthermore, this invention relates to a process for producing a thermoplastic elastomer composition which further comprises adding to the thermoplastic elastomer composition, (e) 50 - 150 parts by weight of a filler per 100 parts by weight of (a) block copolymer (A). The filler may be added to either the intermediate composition or the final composition.

Hitherto, it has been known that a low molecular weight type of block copolymers having the same components as the block copolymer (A) improves polypropylene elastomers in terms of moldability, appearance and maintenance of low-temperature impact resistance, but degrades thickness dependence and anisotropy of mechanical properties, especially tensile strength. These problems are considered due to orientation of the block copolymer of low molecular weight type.

When a high molecular weight type of block copolymer (A) (the block copolymer (A) of this invention) is used in place of the low molecular weight type, low-temperature impact resistance is retained and the thickness dependence and anisotropy of mechanical properties, especially tensile strength are much reduced, but problems occur on moldability and appearance of molded products including flow mark and uneven gloss. These poblems are asssumed to be caused by inferior dispersion of the block copolymer (A).

In accordance with the present invention, it has been found that the above problems are solved by using a high molecular weight block copolymer (A) which is previously extended by an extender oil, in the form of an intermediate composition with polypropylene or an intermediate composition without polypropylene called an oil extended block copolymer. It has also been found that addition of a filler affords a thermoplastic elastomer composition which retains the above properties and also has small linear expansion coefficient.

Components of this invention are specifically explained below.

(a) Block copolymer (A):

Block copolymer (A) is a selectively hydrogenated block copolymer which comprises at least two mono-alkenyl or mono-alkenylidene aromatic hydrocarbon polymer blocks A and at least one partially or completely hydrogenated aliphatic conjugated diene hydrocarbon polymer block B.

The mono-alkenyl or mono-alkenylidene aromatic hydrocarbon polymer block A is preferably constituted by monomers such as of styrene, $\alpha$-methylstyrene or t-butylstyrene.

The aliphatic conjugated diene hydrocarbon polymer block B is preferably constituted by monomers such as of butadiene or isoprene.

In case butadiene is used as the conjugated diene monomer of the polymer block B, a butadiene copolymer of 1 - 4 structure and 1 - 2 structure is produced in the molecular chain of the polymer block B. When this block copolymer is hydrogenated, double bonds are saturated to give a structure comprising ethylene polymer portions produced from 1 - 4 structure and butylene polymer portions produced from 1 - 2 structure.

As a result, the block copolymer (A) has, for example, styrene-ethylene•butylene-styrene structure, which is called "SEBS".

As stated before, number-average molecular weight of mono-alkenyl or mono-alkenylidene aromatic hydrocarbon polymer block A in the block copolymer (A) is 25,000 - 35,000 and that of the polymer block B is 100,000 - 150,000.

If a block copolymer (A) in which number-average molecular weight of polymer block A is less than 25,000 or that of polymer block B is less than 100,000 is used to prepare a composition, high flowability and high gloss can be obtained, but thickness dependence and anisotropy of mechanical properties, especially tensile strength, become worse.

If a block copolymer in which number-average molecular weight of polymer block A is more than 35,000 or that of polymer block B is more than 150,000 is used, thickness dependence and anisotropy of mechanical properties, especially tensile strength, are satisfactory, but flowability is inferior and gloss and appearance of molded products are also inferior.

Many processes have been proposed for production of the block copolymer. According to the process disclosed in Japanese Patent Kokoku No. 40-23798 which is a representative one, block polymerization is effected in an inert solvent using lithium catalyst of Ziegler catalyst to obtain a block copolymer of a mono-alkenyl or mono-alkenylidene aromatic hydrocarbon and an aliphatic conjugated diene hydrocarbon.

Hydrogenation treatment of such a block copolymer is carried out in the presence of a hydrogenation catalyst in an inert solvent, for example, by the processes disclosed in Japanese Patent Kokoku Nos. 42-8704, 43-6636 and 46-20814. Hydrogenation rate is at least 50 %, preferably 80 % or more in polymer block B. Also, 25 % or less of the aromatic unsaturated bonds in polymer block A are hydrogenated.

Representative of such partially or completely hydrogenated block copolymers is one which is sold under the tradename of "KRATON®-G" from Shell Chemical Co. in U.S.A.

(b) Extender oil:

The extender oil used in this invention as component (b) is a mineral oil called process oil or extender oil used for softening or extending rubbers or improving their processability, preferably paraffinic or naphthenic hydrocarbon oil containing 30 % or less of aromatic hydrocarbon.

In general, these mineral type diluted oils are mixture of the three of aromatic ring, naphthenic ring and paraffinic chain hydrocarbons. Those which contain the paraffinic chain hydrocarbon in an amount of 50 % or more of total hydrocarbons are called paraffinic hydrocarbon oils, those which contain the naphthenic ring hydrocarbon in an amount of 30 - 45 % are called naphthenic hydrocarbon oils, and those which contain the aromatic hydrocarbon in an amount of 30 % or more are called aromatic hydrocarbon oils. Paraffinic oils and naphthenic oils are superior to aromatic oils in dispersibility.

These extender oils have the following properties: a kinematic viscosity at $40°C$ of $20 \times 10^{-6}$ $m^2/s$ to $500 \times 10^{-6}$ $m^2/s$ (20 to 500 cst), a flow-point of -10 - -15 °C and a flash point of 170 - 300 °C.

Amount of the extender oil is 50 - 150 parts by weight per 100 parts by weight of block copolymer (A). If this is more than 150 parts by weight, thickness dependence and anisotropy of mechanical properties, especially tensile strength, appear and besides modulus of flexural rigidity and heat resistance decrease and viscousness with oil occurs to make the surface of molded product sticky. If less than 50 parts by weight, flowability is insufficient and uneven gloss and flow mark occur, resulting in inferior surface appearance of molded product.

(c) Polypropylene I:

Polypropylene I used in this invention includes, for example, homopolypropylene, propylene-ethylene random copolymer, and propylene-ethylene block copolymer.

The homopolypropylene and the propylene-ethylene random copolymer preferably has a melt flow rate of 10 - 50 g/10 min. If melt flow rate is lower than 10 g/10 min., moldability of final composition and appearance of molded product are inferior. If the rate is higher than 50 g/10 min., properties of final composition, especially tensile strength and impact strength are deteriorated.

The propylene-ethylene random copolymer preferably has an ethylene content of 1 - 5 % by weight. If ethylene content is more than 5 % by weight, heat resistance of final composition is deteriorated.

The propylene-ethylene block copolymer preferably has an ethylene content of 3 - 15 % by weight and a melt flow rate of 10 - 30 g/10 min. When melt flow rate is lower than 10 g/10 min., moldability of final composition and appearance of molded product are inferior. When the rate is higher than 30 g/10 min., properties of final composition, especially tensile strength and impact strength are reduced.

Amount of homopolypropylene, propylene-ethylene random copolymer or propylene-ethylene block copolymer in the intermediate composition is preferably 0 - 50 parts by weight per 100 parts by weight of block copolymer (A). When this is more than 50 parts by weight, appearance of molded product made from final composition is inferior. In addition, in case of homopolypropylene and propylene-ethylene random copolymer, if the amount exceeds 50 parts by weight, impact strength is also decreased.

(d) Polypropylene II:

Polypropylene II used in this invention includes, for example, the above-mentioned homopolypropylene, propylene-ethylene random copolymer and propylene-ethylene block copolymer. However, it is necessary that the polypropylene II contains 35 % by weight or more of a propylene-ethylene block copolymer having a melt flow rate of 10 - 30 g/10 min. and an ethylene content of 3 - 15 % by weight. If content of the propylene-ethylene block copolymer is less than 35 % by weight, impact strength of final composition is reduced.

Amount of the polypropylene components (polypropylenes I and II) in a final composition is 200 - 400 parts by weight per 100 parts by weight of block copolymer (A). If this is less than 200 parts by weight, the composition is inferior in heat resistance and modulus of stiffness. If the amount is more than 400 parts by weight, modulus of flexural stiffness of final composition becomes too high, resulting in loss of flexibility and decrease in low-temperature impact strength.

(e) Filler:

Inorganic fillers used as fillers in this invention are not critical, but are preferably calcium carbonate, talc, clay, silica, diatomaceous earth, alumina, zinc white, magnesium oxide, mica, calcium sulfite, calcium sulfate, calcium silicate, glass powder, glass fibers including those which are treated with silane, asbestos and gypsum fiber. Organic fillers are also not critical, but are preferably various wood flours, cellulose fibers, and melamine powders. These may be used alone or as a mixture thereof. Among those fillers, talc, calcium carbonate and mica are more preferred in view of a balance between impact resistance and heat resistance of a filler-containing polypropylene resin composition.

If fillers are subjected to surface treatment, a filler-containing polypropylene resin composition of higher quality in which the balance between stiffness and impact strength is improved, can be obtained. Surface treating agents include organic silane compounds such as vinyltriethoxy silane, vinyltris($\beta$-methoxyethoxy)-silane, $\gamma$-aminopropyltrimethoxysilane, $\gamma$-aminopropyltriethoxysilane, $\gamma$-methacryloxypropyltrimethoxysilane, N-($\beta$-aminoethyl)-$\gamma$-aminopropyltrimethoxysilane and $\gamma$-glycidoxymethoxysilane.

In the present invention, amount of the filler is preferably 50 - 150 parts by weight per 100 parts by weight of block copolymer (A) for both cases of using an intermediate composition and an oil-extended block copolymer (A). If the amount is more than 150 parts by weight, flowability is insufficient and uneven gloss and flow marks occur, resulting in poor appearance of molded product. If the amount is less than 50 parts by weight, linear expansion coeefficient is not sufficiently lowered.

Fillers may be added to either of an intermediate composition or a final composition.

(f) Methods of mixing and molding:

In production of the thermoplastic elastomer composition of this invention, if necessary, various styrene elastomers such as styrene-butadiene random copolymer and styrene-butadiene block copolymer and various polyolefin elastomers such as non-crystalline ethylene-propylene copolymer and ethylene-propylene-unconjugated diene copolymer may be additionally incorporated in such range as substantially not damaging the various properties of the composition.

It is also possible to further add suitable amounts of various additives such as antioxidants, weathering agents, antistatic agents, foaming agents and colorants.

The composition of this invention can be obtained by uniformly mixing the above-mentioned components at a given mixing ratio. For the uniform mixing, there may be employed the method of mechanical melt kneading by an ordinary kneader for thermoplastic resins. The kneaders include, for example, single-screw extruder, twin-screw extruder, Banbury mixer, and twin roll. Mixing operation of the components may be carried out at once or divisionally.

(g) Properties and uses:

The thermoplastic elastomer composition of this invention has mechanical strength, heat resistance, impact resistance, surface gloss, appearance and weathering resistance which are equal to or superior to those of olefinic thermoplastic elastomers.

Feature of this invention is that a thermoplastic elastomer composition can be obtained which is superior in moldability for large molded products and appearance of them, and very low in thickness dependence of mechanical properties, especially tensile strength,and anisotropy in the mechanical properties, with retaining low temperature impact strength.

It is also a feature of this invention that a thermoplactic elastomer which has a small linear expansion coefficient with retaining the above-mentioned properties can be obtained by adding fillers.

The composition of this invention can be molded and processed by molding machines normally used for thermoplastic resins and by methods such as injection molding, extrusion molding, blow molding and calendering.

Representative uses of the composition are as follows.

(1) Automobile exterior trim parts such as soft bumper, corner bumper, side shield, over rider, bumper mole and side mole.

(2) Automobile interior trim parts such as ceiling sheet, seat belt cover and interior mat.

(3) Various hose parts of household appliances such as washing machine and drier for bedclothes.

This invention will be explained in more detail by the following examples and comparative examples, but this invention should never be limited to them.

(1) Preparation of intermediate composition:

A block copolymer (called "SEBS-1") having A-B-A structure comprising polystyrene block A having a number-average molecular weight of 29,000 and completely hydrogenated butadiene block B having a number-average molecular weight of 116,000 and a comparative block copolymer (called "SEBS-2") having A-B-A structure comprising polystyrene block A having a number-average molecular weight of 7,000 and completely hydrogenated butadiene block B having a number-average molecular weight of 35,000; a homopolypropylene (called "PP-1") having a melt flow rate of 20 g/10 min. as polypropylene I; Diana process oil PW-380, i.e., paraffinic oil having a kinematic viscosity at 40°C of 381.6 x 10$^{-6}$ m$^2$/s (381.6 cst) and an average molecular weight of 746 manufactured by Idemitsu Kosan Co., Ltd. as an extender oil; and talc of JR-2 manufactured by Hayashi Kasei Co. as a filler, were mixed at ratios as shown in Table 1. To the mixture was further added 0.1 part by weight of "Irganox® 1010" manufactured by Ciba-Geigy Corp. as an antioxidant per 100 parts by weight of the above mixture. In case of intermediate compositions, MBR-1 to 3, 6 and 8 to 12, the resulting mixture was subjected to premixing for 5 minutes by a super mixer and then to melt kneading at 190°C for 10 minutes by a Banbury mixer. In case of intermediate compositions, MBR-4, MBR-5 and MBR-7, the resulting mixture was subjected to mixing for 10 minutes by super mixer. The resulting kneaded product was pelletized by a single-screw extruder to obtain a respective intermediate composition shown in Table 1.

(2) Methods for measurement of properties:

① Preparation of test specimen:

An elastomer composition was molded into a flat sheet of 100 mm width, 400 mm length and 3 mm thickness by an injection molding machine, NEOMATT 515/150 manufactured by Sumitomo Heavy Industries Ltd. Then, the flat sheet was subjected to the following tests.

② Melt flow rate:

This was measured according to JIS K7210 at 230°C under a load of 2.16 kg.

③ Tensile strength, tensile elongation:

These were measured according to JIS K6301 at a pulling rate of 50 mm/min. on JIS No. 2 dumbbell specimens punched out of the flat sheet in its flow direction (MD) and transverse direction (TD).

④ Izod impact strength (notched):

This was measured according to JIS K7110 at 23°C and -30°C on dumbbell specimens punched out of the flat sheet, having 12.7 mm width and 63.5 mm length with a V notch.

⑤ Flexural modulus:

This was measured according to JIS K7203 at a span of 50 mm and a bending rate of 10 mm/min.

⑥ Appearance:

Flow mark, fish eye: The surface of the flat sheet of 100 mm x 400 mm x 3 mm thick was visually observed and graded by five point evaluation method as follows:
Inferior ← 1, 2, 3, 4, 5 → superior
Stickiness: The surface of the flat sheet of 100 mm x 400 mm x 3 mm thick was touched by bare hand and stickiness was graded by feel at the touching by five point evaluation method as follows:
Inferior ← 1, 2, 3, 4, 5 → superior

⑦ Linear expansion coefficient:

This was measured in a temperature range of -30°C to 80°C by a thermomechanical analysis apparatus TMA-40 manufactured by Shimadzu Corp., on a test specimen of 12.7 mm x 12.7 mm square obtained from the flat sheet of 100 mm x 400 mm x 3 mm thick.

Examples 1 - 7 and Comparative Example 1 - 6

The previously prepared intermediate composition was mixed with homopolypropylene (PP-1) having a melt flow rate of 20 g/10 min. and a propylene-ethylene block copolymer (PP-2) having a melt flow rate of 20 g/10 min. and an ethylene content of 6 % by weight with ethylene content of propylene and ethylene copolymerized portion being 38 % by weight and an intrinsic viscosity of the copolymerized portion in tetralin solution at 135°C being 4.8 dl/g as polypropylene II at a mixing ratio as shown in Table 2. To 100 parts by weight of this mixture was added 1.5 parts by weight of a black pigment master batch PEC865 manufactured by Sumika Color Co., followed by mixing for 2 minutes by a super mixer and then melt-kneading by a twin-screw extrusion kneader TEX-44 manufactured by Nihon Seikosho Co. set at 220°C to obtain a sample of pelletized composition.

Test specimens of flat sheets were made from said sample by the above-mentioned method, and tensile strength, tensile elongation, Izod impact strength, flexural modulus, and linear expansion coefficient of the test specimen were measured and appearance thereof was also evaluated.

The results are shown in Tables 2 and 3. As is clear from Tables 2 and 3, the products obtained in Examples according to this invention were superior in appearance and balance of various properties to those obtained in Comparative Examples which lacked a constructive requirement of this invention.

As explained above, this invention provides a thermoplastic elastomer composition good in moldability, superior in appearance and little in anisotropy of mechanical properties, especially tensile strength, and retaining low temperature impact strength, and a process for producing the composition.

Table 1

| | Unit | MBR-1 | MBR-2 | MBR-3 | MBR-4 | MBR-5 | MBR-6 | MBR-7 | MBR-8 | MBR-9 | MBR-10 | MBR-11 | MBR-12 |
|---|---|---|---|---|---|---|---|---|---|---|---|---|---|
| PP-1 | | 16 | 20 | 27 | – | – | 27 | – | 20 | 10 | 27 | 27 | 27 |
| PW380 | Part | 80 | 100 | 120 | 100 | 80 | 120 | 120 | 100 | 30 | 200 | 120 | 120 |
| SEBS-1 | by | 100 | 100 | 100 | 100 | 100 | 100 | 100 | – | 100 | 100 | 100 | – |
| SEBS-2 | weight | – | – | – | – | – | – | – | 100 | – | – | – | 100 |
| Talc | | – | – | – | – | – | 79 | – | – | – | – | 226 | 79 |
| Total | Part by weight | 196 | 220 | 247 | 200 | 280 | 326 | 220 | 220 | 140 | 327 | 473 | 326 |

EP 0 323 741 B1

Table 2

| | | Unit | Example | | | | | | |
|---|---|---|---|---|---|---|---|---|---|
| | | | 1 | 2 | 3 | 4 | 5 | 6 | 7 |
| mixing ratio | PP-1 | Part by weight | – | – | – | 20 | 16 | – | 27 |
| | PP-2 | Part by weight | 240 | 270 | 300 | 270 | 240 | 200 | 200 |
| | Intermediate composition | Part by weight | MBR-1 196 | MBR-2 220 | MBR-3 247 | MBR-4 200 | MBR-5 180 | MBR-6 326 | MBR-7 220 |
| Proper-ties | Melt flow rate | g/10 min. | 10.4 | 14.1 | 19.7 | 13.7 | 10.5 | 16.2 | 20.1 |
| | Ten-sile prop-er-ties | Strength[1] | MD | $kg/cm^2$ | (1.06) 243 | (1.07) 232 | (1.08) 205 | (1.06) 230 | (1.04) 240 | (1.08) 177 | (1.09) 208 |
| | | | TD | | 229 | 216 | 189 | 218 | 230 | 164 | 190 |
| | | Elongation | MD | % | 660 | 700 | 630 | 710 | 670 | 660 | 640 |
| | | | TD | | 680 | 660 | 650 | 670 | 680 | 630 | 670 |
| | Izod impact strength (notched) | 23 °C | kg·cm/cm | NB | NB | NB | NB | NB | NB | NB |
| | | -30 °C | | NB | NB | NB | NB | NB | NB | NB |
| | Flexural modulus | $kg/cm^2$ | 4600 | 4500 | 4450 | 4400 | 4580 | 4650 | 4600 |
| | Appear-ance | Flow mark | – | 3 | 5 | 5 | 5 | 3 | 4 | 5 |
| | | Fish eye | – | 5 | 5 | 5 | 5 | 5 | 5 | 5 |
| | | stickiness | – | 5 | 5 | 5 | 5 | 5 | 5 | 5 |
| | Linear expansion coefficient | $x10^{-5}$ cm/cm·°C | 13.0 | 12.8 | 12.6 | 12.7 | 13.1 | 8.2 | 12.5 |

(1): Value in (  ) is MD/TD ratio of tensile strength.

EP 0 323 741 B1

Table 3

| | | Unit | Comparative Example | | | | | |
|---|---|---|---|---|---|---|---|---|
| | | | 1 | 2 | 3 | 4 | 5 | 6 |
| Mixing ratio | PP-1 | Part by weight | 20 | – | – | – | – | – |
| | PP-2 | Part by weight | 270 | 270 | 171 | 398 | 175 | 200 |
| | PW380 | Part by weight | 100 | – | – | – | – | – |
| | SEBS-1 | Part by weight | 100 | – | – | – | – | – |
| | Intermediate composition | Part by weight | – | MBR-8 220 | MBR-9 140 | MBR-10 327 | MBR-11 473 | MBR-12 326 |

EP 0 323 741 B1

Table 3 (continued)

| Properties | | | Unit | Comparative Example | | | | | |
|---|---|---|---|---|---|---|---|---|---|
| | | | | 1 | 2 | 3 | 4 | 5 | 6 |
| Melt flow rate | | | g/10 min. | 15.1 | 20.1 | 6.5 | 28 | 7.1 | 16.2 |
| Tensile properties | Strength(1) | MD | kg/cm² | (1.18) 228 | (1.28) 180 | (1.06) 245 | (1.18) 192 | (1.19) 151 | (1.32) 172 |
| | | TD | | 194 | 140 | 230 | 163 | 127 | 130 |
| | Elongation | MD | % | 650 | 620 | 670 | 620 | 470 | 550 |
| | | TD | | 600 | 540 | 700 | 540 | 410 | 470 |
| Izod impact strength (notched) | | 23 °C | kg·cm/cm | NB | NB | NB | NB | NB | NB |
| | | -30 °C | | NB | NB | NB | 20 | 8 | NB |
| Flexural modulus | | | kg/cm² | 4610 | 4500 | 4700 | 4000 | 5100 | 4500 |
| Appearance | Flow mark | | - | 3 | 5 | 1 | 5 | 1 | 5 |
| | Fish eye | | - | 1 | 5 | 5 | 5 | 5 | 5 |
| | Stickiness | | - | 5 | 5 | 5 | 2 | 5 | 5 |
| Linear expansion coefficient | | | x10⁻⁵ cm/cm·°C | 12.7 | 12.6 | 12.8 | 12.4 | 4.0 | 8.1 |

(1): Value in ( ) is MD/TD ratio of tensile strength.

## Claims

1. A thermoplastic elastomer composition which comprises
    a previously melt-kneaded intermediate composition comprising (a) 100 parts by weight of a selectively hydrogenated block copolymer which has at least two mono-alkenyl or mono-alkenylidene aromatic hydrocarbon polymer blocks A wherein 25% or less of the aromatic unsaturated bonds are hydrogenated and which has a number-average molecular weight of 25,000 - 35,000 and at least one aliphatic conjugated diene hydrocarbon polymer block B which is at least 50% hydrogenated and has a number-average molecular weight of 100,000 - 150,000, (b) 50 - 150 parts by weight of an extender oil

11

having a kinematic viscosity at 40°C of 20 x 10$^{-6}$ m$^2$/s to 500 x 10$^{-6}$ m$^2$/s (20 to 500 cst), a flow point of -10 to -15°C and a flash point of 170 to 300°C and (c) 0 - 50 parts by weight of polypropylene I; and

(d)polypropylene II which contains at least 35 % by weight of a propylene-ethylene block copolymer having a melt flow rate of 10 - 30 g/10 min. and an ethylene content of 3 - 15% by weight, in such amount that total amount of polypropylene I plus polypropylene II is 200 - 400 parts by weight per 100 parts by weight of block copolymer (a), the composition optionally further comprising up to 150 parts by weight, per 100 parts by weight of the block copolymer, of a filler.

2. A thermoplastic elastomer composition according to claim 1 which additionally contains (e) 50 - 150 parts by weight of a filler per 100 parts by weight of block copolymer (a).

3. A thermoplastic elastomer composition according to claim 1 or claim 2 wherein the mono-alkenyl aromatic hydrocarbon block polymer A is polystyrene.

4. A thermoplastic elastomer composition according to claim 1 or claim 2 wherein the mono-alkenylidene aromatic hydrocarbon polymer block A is poly-α-methyl-styrene or poly-t-butylstyrene.

5. A thermoplastic elastomer composition according to any one of claims 1 to 4 wherein the block copolymer (a) is a selectively hydrogenated block copolymer having two polystyrene blocks as block A and having one partially or completely hydrogenated polybutadiene block as block B.

6. A thermoplastic elastomer composition according to any one of claims 1 to 5 wherein the extender oil (b) is a hydrocarbon oil.

7. A thermoplastic elastomer composition according to any one of claims 2 to 6 wherein the filler (e) is at least one member selected from the group consisting of talc, calcium carbonate and mica.

8. A process for producing a thermoplastic elastomer composition according to claim 1 which comprises melt-kneading an intermediate composition comprising (a) 100 parts by weight of a selectively hydrogenated block co-polymer which has at least two mono-alkenyl or mono-alkenylidene aromatic hydrocarbon polymer blocks A having a number-average molecular weight of 25,000 - 35,000 and at least one partially or completely hydrogenated aliphatic conjugated diene hydrocarbon polymer block B having a number-average molecular weight of 100,000 - 150,000, (b) 50 - 150 parts by weight of an extender oil and (c) 0 - 50 parts by weight of polypropylene I; then adding, to the kneaded intermediate composition, (d) poly-propylene II containing at least 35% by weight of a propylene-ethylene block copolymer having a melt flow rate of 10 to 30 g/10 min. and an ethylene content of 3 - 15% by weight in such amount that the total amount of polypropylene I plus polypropylene II is 200 - 400 parts by weight per 100 parts by weight of block copolymer (a); and then further melt kneading the mixture, into the final composition or any intermediate composition and, optionally incorporating into the final composition or any intermediate composition up to 150 parts by weight, per 100 parts by weight of the block copolymer, of a filler.

9. A process according to claim 8 for producing a thermoplastic elastomer composition according to any one of claims 2 to 7.

10. A shaped article formed of a thermoplastic elastomer composition according to any one of claims 1 to 7.

**Patentansprüche**

1. Thermoplastische Elastomer-Zusammensetzung, welche umfaßt eine vorher schmelzgeknetete Zwischen-Zusammensetzung, umfassend (a) 100 Gewichtsteile eines selektiv hydrierten Blockcopolymers, das mindestens zwei aromatische Monoalkenyl- oder Monoalkenyliden-Kohlenwasserstoff-Polymerblöcke A, worin 25% oder weniger der aromatischen ungesättigten Bindungen hydriert sind und welche ein Zahlenmittel des Molekulargewichts von 25000 bis 35000 haben, und mindestens einen aliphatischen konjugierten Dien-Kohlenwasserstoff-Polymerblock B, der Zu mindestens 50% hydriert ist und ein Zahlenmittel des Molekulargewichts von 100000 bis 150000 hat, aufweist, (b) 50 bis 150

EP 0 323 741 B1

Gewichtsteile eines Strecköls mit einer kinematischen Viskosität von 20 x 10$^{-6}$ m$^2$/s bis 500 x 10$^{-6}$ m$^2$/s (20 bis 500 cst) bei 40°C, einem Fließpunkt von -10 bis -15°C und einem Flammpunkt von 170 bis 300°C und (c) 0 bis 50 Gewichtsteile Polypropylen I; sowie (d) Polypropylen II, das mindestens 35 Gewichtsprozent eines Propylen-Ethylen-Blockcopolymers mit einer Fließfähigkeit von 10 bis 30 g/10 min und einem Ethylengehalt von 3 bis 15 Gewichtsprozent enthält, in solcher Menge, daß die Gesamtmenge an Polypropylen I plus Polypropylen II 200 bis 400 Gewichtsteile pro 100 Gewichtsteile des Blockcopolymers (a) beträgt, wobei die Zusammensetzung gegebenenfalls zusätzlich bis zu 150 Gewichtsteile eines Füllstoffes pro 100 Gewichtsteile des Blockcopolymers umfaßt.

2. Thermoplastische Elastomer-Zusammensetzung nach Anspruch 1, welche zusätzlich (e) 50 bis 150 Gewichtsteile eines Füllstoffes pro 100 Gewichtsteile des Blockcopolymers (a) enthält.

3. Thermoplastische Elastomer-Zusammensetzung nach Anspruch 1 oder Anspruch 2, worin der aromatische Monoalkenyl-Kohlenwasserstoff-Polymerblock A Polystyrol ist.

4. Thermoplastische Elastomer-Zusammensetzung nach Anspruch 1 oder Anspruch 2, worin der aromatische Monoalkenyliden-Kohlenwasserstoff-Polymerblock A Poly-$\alpha$-methylstyrol oder Poly-t-butylstyrol ist.

5. Thermoplastische Elastomer-Zusammensetzung nach irgendeinem der Ansprüche 1 bis 4, worin das Blockcopolymer (a) ein selektiv hydriertes Blockcopolymer mit zwei Polystyrolblöcken als Block A und einem partiell oder vollständig hydrierten Polybutadienblock als Block B ist.

6. Thermoplastische Elastomer-Zusammensetzung nach irgendeinem der Ansprüche 1 bis 5, worin das Strecköl (b) ein Kohlenwasserstofföl ist.

7. Thermoplastische Elastomer-Zusammensetzung nach irgendeinem der Ansprüche 2 bis 6, worin der Füllstoff (e) mindestens eine Substanz ist, die unter der aus Talkum, Calciumcarbonat und Glimmer bestehenden Gruppe ausgewählt ist.

8. Verfahren zur Herstellung einer thermoplastischen Elastomer-Zusammensetzung nach Anspruch 1, welches umfaßt das Schmelzkneten einer Zwischen-Zusammensetzung, umfassend (a) 100 Gewichtsteile eines selektiv hydrierten Blockcopolymers, das mindestens zwei aromatische Monoalkenyl- oder Monoalkenyliden-Kohlenwasserstoff-Polymerblöcke A mit einem Zahlenmittel des Molekulargewichts von 25000 bis 35000 und mindestens einen partiell oder vollständig hydrierten aliphatischen konjugierten Dien-Kohlenwasserstoff-Polymerblock B mit einem Zahlenmittel des Molekulargewichts von 100000 bis 150000 aufweist, (b) 50 bis 150 Gewichtsteile eines Strecköls und (c) 0 bis 50 Gewichtsteile Polypropylen I; anschließendes Versetzen der gekneteten Zwischen-Zusammensetzung mit (d) Polypropylen II, das mindestens 35 Gewichtsprozent eines Propylen-Ethylen-Blockcopolymers mit einer Fließfähigkeit von 10 bis 30 g/10 min und einem Ethylengehalt von 3 bis 15 Gewichtsprozent enthält, in solcher Menge, daß die Gesamtmenge an Polypropylen I plus Polypropylen II 200 bis 400 Gewichtsteile pro 100 Gewichtsteile des Blockcopolymers (a) beträgt; und dann weiteres Schmelzkneten der Mischung zu einer Fertig-Zusammensetzung oder einer beliebigen Zwischen-Zusammensetzung und gegebenenfalls Einmischen in die Fertig-Zusammensetzung oder Zwischen-Zusammensetzung von bis zu 150 Gewichtsteilen eines Füllstoffes pro 100 Gewichtsteile des Blockcopolymers.

9. Verfahren nach Anspruch 8 zur Herstellung einer thermoplastischen Elastomer-Zusammensetzung nach irgendeinem der Ansprüche 2 bis 7.

10. Formkörper, gebildet aus einer thermoplastischen Elastomer-Zusammensetzung nach irgendeinem der Ansprüche 1 bis 7.

**Revendications**

1. Composition thermoplastique élastomère qui comprend
une composition intermédiaire préalablement malaxée à l'état fondu comprenant (a) 100 parties en poids d'un copolymère séquencé, hydrogéné sélectivement, qui a au moins deux séquences A de polymère d'hydrocarbure aromatique monoalcénylique ou monoalcénylidénique, dans lesquelles 25 %

13

ou moins de 25 % des liaisons à insaturation aromatique sont hydrogénées et qui a une masse moléculaire moyenne en nombre de 25.000 à 35.000 et au moins une séquence B de polymère d'hydrocarbure aliphatique à diène conjugué qui est hydrogénée à au moins 50 % et qui a une masse moléculaire moyenne en nombre de 100.000 à 150.000, (b) de 50 à 150 parties en poids d'une huile de dilution ayant une viscosité cinématique à 40°C de 20 x 10$^{-6}$ m$^2$/s à 500 x 10$^{-6}$ m$^2$/s (20 à 500 cst), un point d'écoulement de -10 à -15°C et un point d'éclair de 170 à 300°C et (c) de 0 à 50 parties en poids de polypropylène I; et

(d) du polypropylène II qui contient au moins 35 % en poids d'un copolymère séquencé de propylène et d'éthylène ayant une vitesse d'écoulement à l'état fondu de 10 à 30 g/10 minutes et une teneur en éthylène de 3 à 15 % en poids, en une quantité telle que la quantité totale du polypropylène I et du polypropyléne II représente entre 200 et 400 parties en poids pour 100 parties en poids du copolymère (a) séquencé, la composition comprenant en outre éventuellement jusqu'à 150 parties en poids d'une charge pour 100 parties en poids du copolymère séquencé.

2.  Composition thermoplastique élastomère suivant la revendication 1, qui contient en plus (e) de 50 à 150 parties en poids d'une charge pour 100 parties en poids du copolymère (a) séquencé.

3.  Composition thermoplastique élastomère suivant la revendication 1 ou suivant la revendication 2, dans laquelle le polymère A séquencé d'hydrocarbure aromatique monoalcénylique est du polystyrène.

4.  Composition thermoplastique élastomère suivant la revendication 1 ou suivant la revendication 2, dans laquelle la séquence (a) de polymère d'hydrocarbure aromatique monoalcénylidénique est du poly-$\alpha$-méthylstyrène ou du poly-t-butylstyrène.

5.  Composition thermoplastique élastomère suivant l'une quelconque des revendications 1 à 4, dans laquelle le copolymère (a) séquencé est un copolymère séquencé hydrogéné sélectivement ayant deux séquences de polystyrène en tant que séquence A et ayant une séquence de polybutadiène partiellement ou complètement hydrogénée en tant que séquence B.

6.  Composition thermoplastique élastomère suivant l'une quelconque des revendications 1 à 5, dans laquelle l'huile de dilution (b) est une huile hydrocarbonée.

7.  Composition thermoplastique élastomère suivant l'une quelconque des revendications 2 à 6, dans laquelle la charge (e) est au moins choisie parmi le talc, le calcium, le carbonate et le mica.

8.  Procédé de préparation d'une composition thermoplastique élastomère suivant la revendication 1, qui consiste à malaxer à l'état fondu une composition intermédiaire comprenant (a) 100 parties en poids d'un copolymère séquencé hydrogéné sélectivement qui a au moins deux séquences A de polymère d'hydrocarbure aromatique monoalcénylique ou monoalcénylidénique ayant une masse moléculaire moyenne en nombre de 25.000 à 35.000 et au moins une séquence B de polymère hydrocarbure aliphatique à diène conjugué partiellement ou complètement hydrogéné ayant une masse moléculaire moyenne en nombre de 100.000 à 150.000, (b) de 50 à 150 parties en poids d'une huile de dilution et (c) de 0 à 50 parties en poids de polypropylène I ; puis à ajouter, à la composition intermédiaire malaxée, (d) du polypropylène II contenant au moins 35 % en poids d'un copolymère séquencé de propylène et d'éthylène ayant une vitesse d'écoulement à l'état fondu de 10 à 30 g/10 minutes et une teneur en éthylène de 3 à 15 % en poids en une quantité telle que la quantité totale de polypropylène I et de polypropylène II représente entre 200 et 400 parties en poids pour 100 parties en poids du copolymère A séquencé ; puis à malaxer encore le mélange à l'état fondu en la composition finale ou en une composition intermédiaire et, le cas échéant, à incorporer à la composition finale ou à la composition intermédiaire jusqu'à 150 parties en poids d'une charge pour 100 parties en poids du copolymère séquencé.

9.  Procédé suivant la revendication 8 de préparation d'une composition thermoplastique élastomère suivant l'une quelconque des revendications 2 à 7.

10. Objet moulé formé d'une composition thermoplastique élastomère suivant l'une quelconque des revendications 1 à 7.